# EUROPEAN PATENT SPECIFICATION

(11) **EP 4 039 866 B1**
(45) Date of publication and mention of the grant of the patent: **21.08.2024**
(21) Application number: 21155116.3
(22) Date of filing: 04.02.2021
(51) Int. Cl.: D06F 57/06, F16B 7/04

(54) **LAUNDRY DRYING RACK**
WÄSCHETROCKNUNGSGESTELL
ÉTENDOIR À LINGE

(43) Date of publication of application: 10.08.2022
(73) Proprietor: Carl Freudenberg KG, 69469 Weinheim (DE)
(72) Inventor: Hem, Sudhana, 36020 Solagna (VI) (IT); Zangirolami, Mattia, 35020 San Pietro Viminario (PD) (IT)

(56) References cited:
- KR-B1- 101 359 703
- US-A- 1 533 470
- US-A1- 2011 192 811
- US-B1- 6 932 227

## Description

The invention relates to a laundry drying rack for drying laundry items.

A plurality of different laundry drying racks for drying laundry items are known from the prior art, wherein these usually comprise a main drying frame on which, in each case, additional drying frames are hingedly arranged on two opposite sides in order to expand the accommodation capacity for laundry items.

In addition, such laundry drying racks usually comprise a support frame hingedly arranged on the main drying frame for supporting the laundry drying rack. A plurality of elongated holding means are provided on the main drying frame and on the additional drying frames, on which the laundry items can be hung up for drying. These holding means can be attached to the main drying frame as well as the additional drying frames, for example, by welding, clinching or also by plastic injection moulding or overmoulding. Likewise, the holding means can be pressed into corresponding receiving parts, whereby such a connecting arrangement requires a high degree of dimensional accuracy.

US 6,932,227 B1 and KR 101 359 703 B1 show a laundry drying rack, comprising at least two mutually opposite cross members and a plurality of elongated holding means on which laundry items can be arranged for drying, wherein the holding means extend between the cross members, and the holding means connect the cross members to one another, wherein the holding means are coupled to the cross members by positive latching connections.

In use, however, plastics in particular are subject to changes in the material properties, so that in the course of time impairments regarding the durability of such a connection may occur.

The object of the invention is to provide a laundry drying rack which has a long durability and a high load-bearing capacity and which allows an easy assembly.

This task is solved by a laundry drying rack with at least two cross members arranged opposite one another and a plurality of elongated holding means on which laundry items can be arranged for drying, wherein the holding means extend between the cross members, and the holding means connect the cross members to one another, wherein the holding means are coupled to the cross members by positive latching connections.

By forming the positive latching connections, a permanent and extremely resilient connecting arrangement can be created between the holding means and the cross members. In this regard, it may be possible for the components of these latching connections to be manufactured individually and to be assembled to form the laundry drying rack in a downstream assembly step. In particular, it may be provided that a non-detachable latching connection is formed between the holding means and the cross members in order to create a particularly durable connection. Similarly, such a latching connection may be provided as a releasable connection, for example, to allow flexible assembly and disassembly of the laundry drying rack or to replace individual components.

In a further development of the laundry drying rack, it is provided that each latching connection comprises at least one connecting element and at least one connecting body which latch together in a positive-locking manner.

By means of the at least one connecting element as well as the at least one connecting body, a structurally simple latching connection can be achieved, which is essentially formed by two components. In this way, a low-cost latching connection can be made between the cross members and the holding means.

A preferred design of the laundry drying rack provides that the connecting element includes at least one latching means which latches together with a corresponding latching structure of the connecting body.

The provision of at least one latching means, as well as a latching structure corresponding thereto, may allow for secure latching of the connecting element to the connecting body as well as easy assembly of the laundry drying rack.

An advantageous design of the laundry drying rack further provides that the latching means is configured as a spigot having at least one radially expanding latching element.

Such a latching element may have a receiving surface that is radially widening in the opposite direction to the direction of insertion, which may allow for both, simplified insertion into the corresponding latching structure as well as effective introduction of force into the latching means to form the latching connection.

Advantageously, the laundry drying rack may provide that the latching means for insertion into the latching structure of the connecting body has radial elasticity, at least in some regions.

This radial elasticity may allow the latching means to be compressed or squeezed so that it can be initially inserted into the latching structure and then automatically return to its original shape to form the latching connection.

Preferably, the laundry drying rack may provide that the radial elasticity of the latching means is formed by at least one perforation formed in the latching means.

In particular, where the latching means is formed from a relatively stiff material, such a perforation may be a simple structural arrangement to provide some flexibility to the latching means. As an alternative to the perforation, the latching means may also be formed at least partially from an elastic material.

One embodiment of the laundry drying rack may further provide that the connecting element includes a receiving portion, in which an end portion of the elongated holding means can be arranged.

By receiving the end portion of the elongated holding means in the receiving portion, in particular a flexurally and torsionally rigid connection can be created between the holding means and the connecting element. Preferably, the end portion of the holding means may be press-fitted, glued, welded, riveted, screwed or the like to the receiving portion.

One embodiment of the laundry drying rack may provide that the latching means is arranged in an axial direction on an end face of the connecting element opposite the receiving portion.

As a result, the latching connection can be formed with a small amount of force, since the insertion of the connecting element into the connecting body results in the direct introduction of force into the axially aligned latching means when the latter is brought into contact with the latching structure.

In a preferred further development of the laundry drying rack, it may be provided that the connecting element is integrally formed as a moulded body.

In particular, it may be provided that the connecting element is in the form of a moulded plastic body and is produced using a plastic injection moulding process. This way, a reduction in manufacturing costs can be achieved.

Particularly preferably, the connecting body of the laundry drying rack may comprise a connecting portion which at least partially receives the connecting element and/or which receives an end portion of the holding means.

By receiving the connecting element in the connecting portion, a flexurally and torsionally rigid connection can be provided between the holding means and the connecting element. In this respect, it may preferably be provided that the connecting element is pressed into the receiving portion. This allows for the connecting element to be held in place and prevents play between the two components.

An advantageous embodiment of the laundry drying rack may provide that the latching structure of the connecting body has an insertion opening into which the latching means of the connecting element is insertable, wherein the latching element engages behind the latching structure.

Through such an insertion opening, a guide may be formed for the latching means to latch with the latching structure. In addition, the insertion opening makes it possible that no the latching means needs no particular orientation in order to latch therewith, whereby a simplified and secure formation of the latching connection can be achieved.

An advantageous further development of the laundry drying rack may further provide that the cross member and the connecting bodies are integrally formed as one moulded body.

Preferably, it is provided that the cross member with the connecting bodies provided thereon is formed as a one-piece plastic moulded body. This may preferably be produced by means of a plastic injection moulding method. It may also be provided that a stiffening element is provided in the cross member. The stiffening member may be overmoulded with a plastic material to form the cross member with the connecting bodies. Using the plastic injection moulding method for manufacturing may allow a reduction in manufacturing costs.

In a particularly preferred embodiment of the laundry drying rack, it may be provided that a respective connecting element is provided at the opposite end portions of the elongated holding means, and a corresponding connecting body is formed on the cross members for each connecting element.

This may allow easy assembly of the laundry drying rack by connecting the opposing end portions of the holding means to the connecting bodies on the cross member by the respective connecting elements, to form the latching connections.

In a further embodiment of the laundry drying rack, it may further be provided that each elongated holding means comprises a hollow profile and at least one extension profile, wherein the at least one extension profile is at least partially axially slidably received within the hollow profile.

This may provide a telescopic extension capability of the laundry drying rack. This can allow for increased capacity to hold laundry items as well as compact folding of the laundry drying rack for storage or transport.

An advantageous further development of the laundry drying rack may further provide that a support frame for setting up the laundry drying rack and/or a lateral additional drying frame for expanding the holding capacity for laundry items are hingedly arranged on each of the cross members.

In this way, the laundry drying rack can be placed on a ground surface for use. In addition, the additional drying frames on the sides can further increase the capacity for laundry items.

Some embodiments of the laundry drying rack according to the invention are explained in more detail with reference the figures. These show, in each case schematically:
- Fig. 1: a perspective view of an embodiment of a laundry drying rack;
- Fig. 2: a detailed perspective view of a cross member of the laundry drying rack;
- Fig. 3: a perspective partial section view of the cross member;
- Fig. 4: a partial section view of a latching connection;
- Fig. 5: a detailed perspective view of a connecting element of the latching connection;
- Fig. 6: a side view of the connecting element;
- Fig. 7: a first representation for attaching the connecting element to a holding means of the laundry drying rack;
- Fig. 8: a second representation for attaching the connecting element to the holding means of the laundry drying rack;
- Fig. 9: a perspective view of two connecting bodies of one of the cross members;
- Fig. 10: a frontal view of the two connecting bodies;

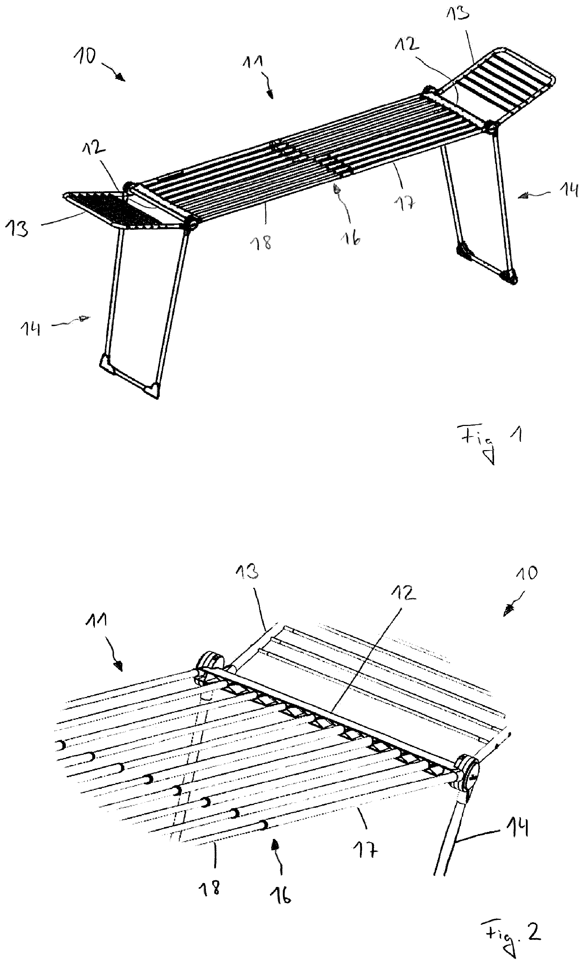

Figure 1 shows a perspective view of an embodiment of a laundry drying rack 10. The laundry drying rack 10 includes a main drying frame 11 and two additional drying frames 13 hingedly arranged to the sides of cross members 12 of the main drying frame 11. The hinged arrangement of the additional drying frames 13 on the cross members 12 allows them to be folded from a use position shown in figure 1 to a non-use position towards the main drying frame 11.

The laundry drying rack 10 has a support frame 14, which is hingedly arranged on the cross members 12 and can be folded from a use position shown in figure 1 to a non-use position towards the main drying frame 11. In the non-use positions of the lateral additional drying frames 13 and the support frame 14, the laundry drying rack 10 is in a folded configuration for space-saving storage or transport.

The main drying frame 11 consists of the two cross members 12 and a plurality of elongated holding means 16 which extend between the cross members 12 and which connect the cross members 12 to each other. The holding means 16 are coupled to the cross members 12 at preferably equally spaced intervals.

The holding means 16 are each telescopic and allow the laundry drying rack 10 to be pulled apart as well as pushed back together. This way, a capacity for drying laundry items can be increased and the size of the laundry drying rack 10 can be reduced to save space for storage or transport. Each holding means 16 is formed by a hollow profile 17 and an extension profile 18, wherein the extension profile 18 is axially slidably received within the hollow profile 17. For this purpose, the extension profile 18 has, at least in part, a smaller outer diameter than an inner diameter of the hollow profile 17, as is illustrated in particular in figure 2. Alternatively, it may likewise be provided that the holding means 16 are each formed as a single hollow profile 17 or as a rod-shaped holding means 16. The hollow profile 17 and the extension profile 18 may be formed of a metallic material. A surface of the hollow profile 17 and the extension profile 18 may be coated with a coating material, in particular a plastic. Similarly, the hollow profile 17 and the extension profile 18 may be formed from a plastic material.

Figure 2 shows a detailed perspective view of one of the cross members 12 of the laundry drying rack 10 with the holding means 16 attached thereto. Although figure 2 shows only one of the two cross members 12, an equivalent embodiment also applies to the other cross member 12. The holding means 16 are each coupled to the cross member 12 at their end portions.

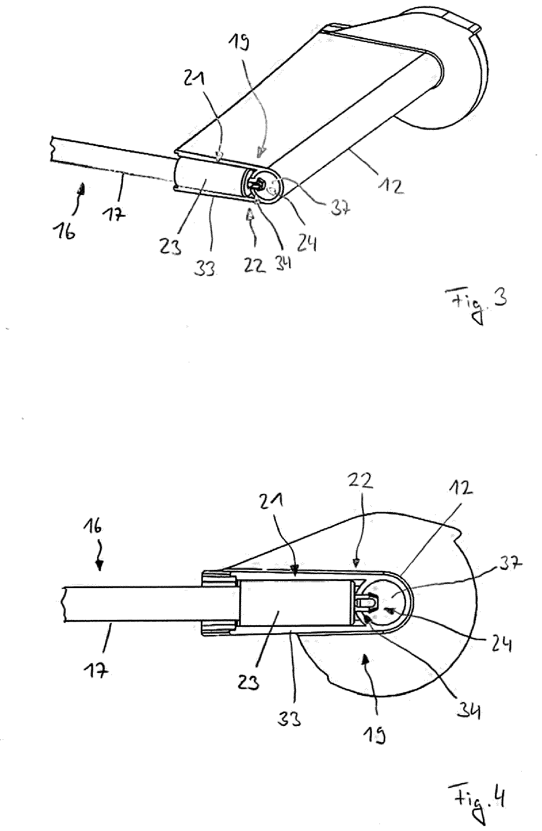

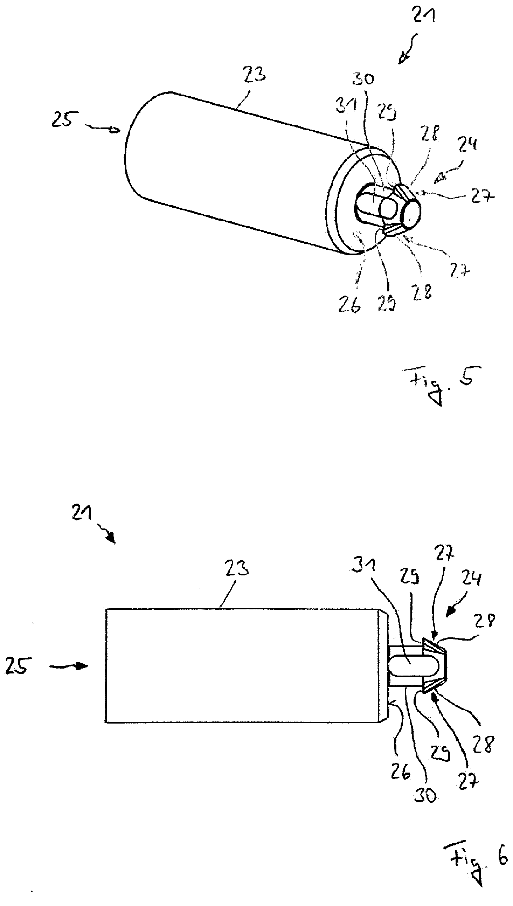

The connection of each holding means 16 to the respective cross member 12 is formed by a positive latching connection 19, which is shown in detail in figures 3 and 4. Of these, figure 3 shows a perspective partial section view of the cross member 12, and figure 4 shows a partial section view of the latching connection 19. The following explanations are made in an exemplary manner using the connection between a holding means 16 and the cross member 12. In addition, with respect to figures 3 and 4, parallel reference is made at appropriate points to further figures 5 to 10, which show detailed views of individual components of the latching connection 19.

The latching connection 19 shown in figures 3 and 4 comprises a connecting element 21 and a connecting body 22 which latch together positively.

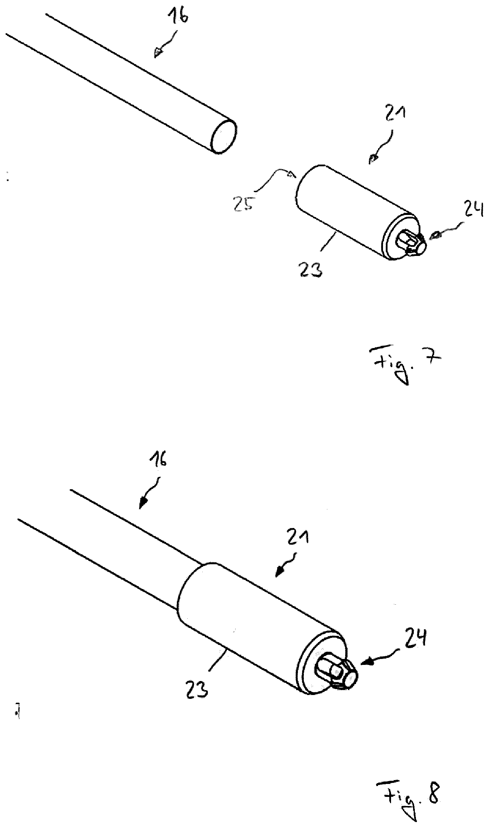

The connecting element 21 is formed by a receiving portion 23 and a latching means 24 arranged on an end face 26 of the connecting element 21. The receiving portion 23 of the connecting element 21 is formed in the shape of a sleeve, wherein the end face 26, at which the latching means 24 is arranged, closes the receiving portion 23 on one side. An opening 25 is formed on the opposite side for inserting the end portion of the holding means 16 into the receiving portion 23. The attachment of the connecting element 21 to the end portion of the holding means 16 is illustrated in figures 7 and 8. The connecting element 21 is fitted with the receiving portion 23 in a cap-like manner onto the end portion of the tubular holding means 16. For a permanent connection of the connecting element 21 to the holding means 16, the receiving portion 23 may be pressed, glued, welded, screwed, riveted or permanently connected by a comparable connection to the end portion of the holding means 16.

Figures 5 and 6 show the connecting element 21 in detail, with figure 5 showing a perspective view of the connecting element 21 and figure 6 showing a side view of the connecting element 21.

The connecting element 21 is formed by the sleeve-shaped receiving portion 23 and the latching means 24 arranged on the end face 26. On the side opposite to the end face 26, the opening 25 of the connecting element 21 is provided for fitting the connecting element 21 onto the end portion of the holding means 16. In particular, the connecting element 21 is formed as a one-piece moulded body. In particular, the connecting element 21 is formed from a plastic material. The connecting element 21 is preferably manufactured by a plastic injection moulding method.

The latching means 24 is in the form of a spigot 30 which projects axially with respect to the end face 26. The spigot 30 has two radially expanding latching elements 27 at an end opposite the end face 26. Similarly, only one or more than two latching elements 27 may be provided. Alternatively, a latching element 27 may be provided which extends fully around an outer circumference of the spigot 30. Each latching element 27 is formed as a latching lug. The latching elements 27 each form an insertion bevel 28, which widens radially from the end of the spigot 30 toward the end face 26. An undercut 29 is formed through each of the latching elements 27 which engages behind a latching structure 34 described later to form the positive latching connection 19.

For insertion of the latching means 24 into this latching structure 34, the latching means 24 has radial elasticity at least in certain regions. For this purpose, a perforation 31 is formed in the latching means 24, so that when force is applied to the latching elements 27, in particular to the insertion bevels 28 of the latching elements 27, the latching means 24 is radially compressed and returns to the initial position after the application of force has ended. In an alternative embodiment, it may likewise be provided that the latching means 24 or even just the latching elements 27 are formed from an elastic material, for example an elastic plastic, silicone, rubber or the like.

As shown in figures 3 and 4, the connecting element 21 is received by a connecting body 22 on the cross member 12. On the cross members 12, a corresponding connecting body 22 is provided for each connecting element 21 on the holding means 16. The connecting bodies 22 are spaced apart from each other at preferably evenly spaced intervals on the cross members 12.

In particular, the cross members 12 are formed with the connecting bodies 22 as a one-piece moulded body. Preferably, the cross members 12 with the connecting bodies 22 are formed of a plastic material. The cross members 12 with the connecting bodies 22 are preferably manufactured by a plastic injection moulding method. It may be provided that the cross member 12 comprises a stiffening member, for example a rail or tube of metal overmoulded with a plastics material, whereby the cross member 12 with the connecting bodies 22 is formed.

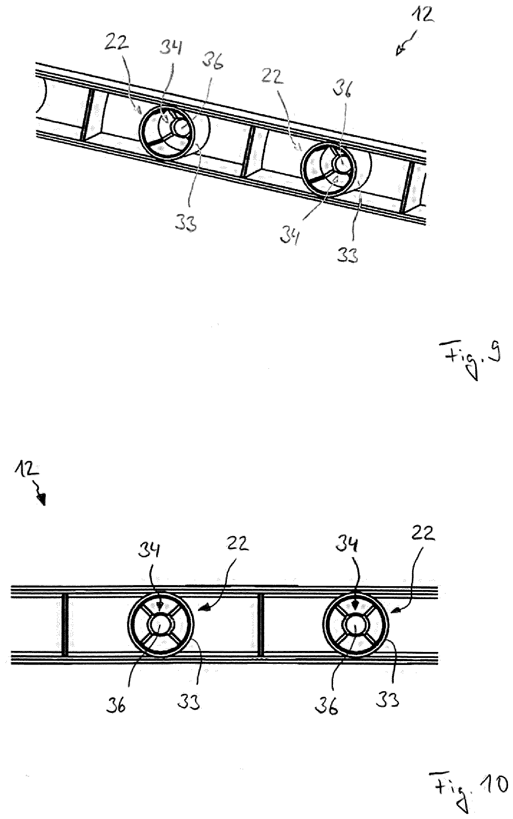

Figures 9 and 10 show exemplary views of two connecting bodies 22, with figure 9 showing a perspective view of the connecting bodies 22 and figure 10 showing a frontal view of the connecting bodies 22.

The connecting body 22 includes a connecting portion 33 and the aforementioned latching structure 34. The connecting portion 33 is formed by a sleeve-shaped member having, on one side, a slide-in opening for inserting the connecting element 21. The latching structure 34 is provided on a side opposite to the slide-in opening. The latching structure 34 has an insertion opening 36, into which the latching means 24 of the connecting element 21 is inserted. The insertion opening 36 may be formed in an end face wall portion of the connecting body 22 or the cross member 12. The insertion opening 36 has a smaller inner diameter than a maximum outer diameter of the latching means 24 in the region of the latching elements 28, and a slightly larger inner diameter than an outer diameter of the spigot 30 of the latching means 24.

When the connecting element 21 is inserted into the connecting body 22, it is first inserted into the connecting portion 33 via the slide-in opening, and the latching means 24 is thus moved in the direction of the insertion opening 36. The wall of the insertion opening 36 is thereby brought into contact with the insertion bevels 28 of the latching elements 27, and a force is exerted thereon by further insertion. This radially compresses the latching means 24, allowing the latching means 24 to pass through the insertion opening 36. On the side of the insertion opening 36 that is opposite the connecting portion 33, a cavity 37 (shown in figures 3 and 4) is provided, so that the radially compressed latching means 24 can radially expand back to its original shape after passing through the insertion opening 36. As a result, the latching means 24 with the undercuts 29 engages behind the latching structure 34 surrounding the insertion opening 36. This way, the connecting element 21 locks into place with the end body 22.

## Claims

1. A laundry drying rack (10), comprising at least two mutually opposite cross members (12) and a plurality of elongated holding means (16) on which laundry items can be arranged for drying, wherein the holding means (16) extend between the cross members (12), and the holding means (16) connect the cross members (12) to one another, wherein the holding means (16) are coupled to the cross members (12) by positive latching connections (19), wherein each latching connection (19) comprises at least one connecting element (21) and at least one connecting body (22) which latch together in a positive manner, wherein the connecting element (21) comprises at least one latching means (24) which latches with a corresponding latching structure (34) of the connecting body (22), **characterised in that** the latching means (24) is formed in the form of a spigot (30) which has at least one radially expanding latching element (27).

2. Laundry drying rack according to claim 1, **characterised in that** the latching means (24) has a radial elasticity at least in some areas for insertion into the latching structure (34) of the connecting body (22).

3. Laundry drying rack according to claim 2, **characterised in that** the radial elasticity of the latching means (24) is formed by at least one perforation (31) formed in the latching means (24).

4. Laundry drying rack according to any one of claims 1 to 3, **characterised in that** the connecting element (21) comprises a receiving portion (23) in which an end portion of the elongated holding means (16) can be arranged.

5. Laundry drying rack according to any one of claims 1 to 4, **characterised in that** the latching means (24) is arranged in an axial direction on an end face (26) of the connecting element (21) opposite the receiving portion (23).

6. Laundry drying rack according to any one of claims 1 to 5, **characterised in that** the connecting element (21) is designed as a moulded body.

7. Laundry drying rack according to any one of claims 1 to 6, **characterised in that** the connecting body (22) has a connecting portion (33) which at least partially receives the connecting element (21) and/or which receives an end portion of the holding means (16).

8. Laundry drying rack according to any one of claims 1 to 7, **characterised in that** the latching structure (34) of the connecting body (22) has an insertion opening (36), into which the latching means (24) of the connecting element (21) can be inserted, wherein the latching element (27) engages behind the latching structure (34).

9. Laundry drying rack according to any one of claims 1 to 8, **characterised in that** the cross member (12) and the connecting bodies (22) are integrally formed as one moulded body.

10. Laundry drying rack according to any one of claims 1 to 9, **characterised in that** a connecting element (21) is provided at each of the opposite end portions of the elongated holding means (16), and a corresponding connecting body (22) is formed on the cross members (12) for each connecting element (21).

11. Laundry drying rack according to any one of the preceding claims, **characterised in that** each elongated holding means (16) comprises a hollow profile (17) and at least one extension profile (18), wherein the at least one extension profile (18) is at least partially axially slidably received within said hollow profile (17).

12. Laundry drying rack according to one of the preceding claims, **characterised in that** a support frame (14) for setting up the laundry drying rack (10) and/or a lateral additional drying frame (13) for expanding the receiving capacity for laundry items are hingedly arranged on the cross members (12) in each case.

## Patentansprüche

1. Wäschetrocknungsgestell (10), umfassend mindestens zwei einander gegenüberliegende Querstreben (12) und eine Vielzahl von länglichen Haltemitteln (16), auf denen Wäschestücke zum Trocknen angeordnet werden können, wobei sich die Haltemittel (16) zwischen den Querstreben (12) erstrecken und die Haltemittel (16) die Querstreben (12) miteinander verbinden, wobei die Haltemittel (16) durch formschlüssige Rastverbindungen (19) mit den Querstreben (12) gekoppelt sind, wobei jede Rastverbindung (19) mindestens ein Verbindungselement (21) und mindestens einen Verbindungskörper (22) umfasst, die formschlüssig miteinander verrasten, wobei das Verbindungselement (21) mindestens ein Rastmittel (24) umfasst, das mit einer entsprechenden Raststruktur (34) des Verbindungskörpers (22) verrastet, **dadurch gekennzeichnet, dass** das Rastmittel (24) in Form eines Zapfens (30) ausgebildet ist, der mindestens ein sich radial erweiterndes Rastelement (27) aufweist.

2. Wäschetrocknungsgestell nach Anspruch 1, **dadurch gekennzeichnet, dass** das Rastmittel (24) mindestens in einigen Bereichen eine radiale Elastizität zum Einsetzen in die Raststruktur (34) des Verbindungskörpers (22) aufweist.

3. Wäschetrocknungsgestell nach Anspruch 2, **dadurch gekennzeichnet, dass** die radiale Elastizität des Rastmittels (24) durch mindestens eine in dem Rastmittel (24) ausgebildete Perforation (31) gebildet wird.

4. Wäschetrocknungsgestell nach einem der Ansprüche 1 bis 3, **dadurch gekennzeichnet, dass** das Verbindungselement (21) einen Aufnahmeabschnitt (23) umfasst, in dem ein Endabschnitt des länglichen Haltemittels (16) angeordnet werden kann.

5. Wäschetrocknungsgestell nach einem der Ansprüche 1 bis 4, **dadurch gekennzeichnet, dass** das Rastmittel (24) in axialer Richtung an einer dem Aufnahmeabschnitt (23) gegenüberliegenden Stirnseite (26) des Verbindungselements (21) angeordnet ist.

6. Wäschetrocknungsgestell nach einem der Ansprüche 1 bis 5, **dadurch gekennzeichnet, dass** das Verbindungselement (21) als Formkörper ausgebildet ist.

7. Wäschetrocknungsgestell nach einem der Ansprüche 1 bis 6, **dadurch gekennzeichnet, dass** der Verbindungskörper (22) einen Verbindungsabschnitt (33) aufweist, der das Verbindungselement (21) mindestens teilweise aufnimmt und/oder der einen Endabschnitt des Haltemittels (16) aufnimmt.

8. Wäschetrocknungsgestell nach einem der Ansprüche 1 bis 7, **dadurch gekennzeichnet, dass** die Raststruktur (34) des Verbindungskörpers (22) eine Einführöffnung (36) aufweist, in die das Rastmittel (24) des Verbindungselements (21) einführbar ist, wobei das Rastelement (27) hinter der Raststruktur (34) einrastet.

9. Wäschetrocknungsgestell nach einem der Ansprüche 1 bis 8, **dadurch gekennzeichnet, dass** die Querstrebe (12) und die Verbindungskörper (22) einstückig als ein Formkörper ausgebildet sind.

10. Wäschetrocknungsgestell nach einem der Ansprüche 1 bis 9, **dadurch gekennzeichnet, dass** an den gegenüberliegenden Endabschnitten des länglichen Haltemittels (16) jeweils ein Verbindungselement (21) vorgesehen ist und für jedes Verbindungselement (21) ein entsprechender Verbindungskörper (22) an den Querstreben (12) ausgebildet ist.

11. Wäschetrocknungsgestell nach einem der vorhergehenden Ansprüche, **dadurch gekennzeichnet, dass** jedes längliche Haltemittel (16) ein Hohlprofil (17) und mindestens ein Verlängerungsprofil (18) umfasst, wobei das mindestens eine Verlängerungsprofil (18) mindestens teilweise axial verschiebbar in dem Hohlprofil (17) aufgenommen ist.

12. Wäschetrocknungsgestell nach einem der vorhergehenden Ansprüche, **dadurch gekennzeichnet, dass** an den Querstreben (12) jeweils ein Stützrahmen (14) zum Aufstellen des Wäschetrocknungsgestells (10) und/oder ein seitlicher Zusatztrocknungsrahmen (13) zum Erweitern der Aufnahmekapazität für Wäschestücke gelenkig angeordnet sind.

## Revendications

1. Étendoir à linge (10), comprenant au moins deux éléments transversaux (12) mutuellement opposés et une pluralité de moyens de maintien allongés (16) sur lesquels les articles de linge peuvent être disposés pour sécher, les moyens de maintien (16) s'étendant entre les éléments transversaux (12), et les moyens de maintien (16) reliant les éléments transversaux (12) l'un à l'autre, les moyens de maintien (16) étant accouplés aux éléments transversaux (12) par des raccordements à verrouillage positif (19), chaque raccordement à verrouillage (19) comprenant au moins un élément de raccordement (21) et au moins un corps de raccordement (22) qui se verrouillent ensemble de manière positive, l'élément de raccordement (21) comprenant au moins un moyen de verrouillage (24) qui se verrouille avec une structure de verrouillage correspondante (34) du corps de raccordement (22), **caractérisé en ce que** le moyen de verrouillage (24) est formé sous la forme d'un embout (30) qui a au moins un élément de verrouillage (27) s'étendant radialement.

2. Étendoir à linge selon la revendication 1, **caractérisé en ce que** le moyen de verrouillage (24) présente une élasticité radiale au moins dans certaines zones à des fins d'insertion dans la structure de verrouillage (34) du corps de raccordement (22).

3. Étendoir à linge selon la revendication 2, **caractérisé en ce que** l'élasticité radiale du moyen de verrouillage (24) est formée par au moins une perforation (31) formée dans le moyen de verrouillage (24).

4. Étendoir à linge selon l'une quelconque des revendications 1 à 3, **caractérisé en ce que** l'élément de raccordement (21) comprend une partie de réception (23) dans laquelle une partie d'extrémité du moyen de maintien allongé (16) peut être disposée.

5. Étendoir à linge selon l'une quelconque des revendications 1 à 4, **caractérisé en ce que** le moyen de verrouillage (24) est disposé dans une direction axiale sur une face d'extrémité (26) de l'élément de raccordement (21) opposée à la partie réceptrice (23).

6. Étendoir à linge selon l'une quelconque des revendications 1 à 5, **caractérisé en ce que** l'élément de raccordement (21) est conçu comme un corps moulé.

7. Étendoir à linge selon l'une quelconque des revendications 1 à 6, **caractérisé en ce que** le corps de raccordement (22) présente une partie de raccordement (33) qui reçoit au moins partiellement l'élément de raccordement (21) et/ou qui reçoit une partie d'extrémité du moyen de maintien (16).

8. Étendoir à linge selon l'une quelconque des revendications 1 à 7, **caractérisé en ce que** la structure de verrouillage (34) du corps de raccordement (22) présente une ouverture d'insertion (36) dans laquelle le moyen de verrouillage (24) de l'élément de raccordement (21) peut être inséré, l'élément de verrouillage (27) venant en prise derrière la structure de verrouillage (34) .

9. Étendoir à linge selon l'une quelconque des revendications 1 à 8, **caractérisé en ce que** l'élément transversal (12) et les corps de raccordement (22) sont formés d'une seule pièce comme un corps moulé.

10. Étendoir à linge selon l'une quelconque des revendications 1 à 9, **caractérisé en ce qu'**un élément de raccordement (21) est situé au niveau de chacune des parties d'extrémité opposée du moyen de maintien allongé (16), et **en ce qu'**un corps de raccordement (22) correspondant est formé sur les éléments transversaux (12) pour chaque élément de raccordement (21).

11. Étendoir à linge selon l'une quelconque des revendications précédentes, **caractérisé en ce que** chaque moyen de maintien allongé (16) comprend un profil creux (17) et au moins un profil d'extension (18), l'au moins un profil d'extension (18) étant reçu de manière coulissante au moins partiellement axialement à l'intérieur dudit profil creux (17).

12. Étendoir à linge selon l'une quelconque des revendications précédentes, **caractérisé en ce qu'**un cadre de support (14) pour l'installation de l'étendoir à linge (10) et/ou un cadre de séchage supplémentaire latéral (13) pour augmenter la capacité de réception d'articles de linge sont disposés de manière articulée sur les éléments transversaux (12) dans chaque cas.
